# EUROPEAN PATENT APPLICATION

(11) **EP 2 902 925 A1**
(43) Date of publication of application: **05.08.2015**
(21) Application number: 14290022.4
(22) Date of filing: 31.01.2014
(51) Int. Cl.: G06F 17/30

(54) **Displaying a dashboard based on constraints of a user device**

(71) Applicant: Hewlett-Packard Development Company, L.P., Houston, TX 77070 (US)
(72) Inventor: Picard, Jean-Charles, 06901 Sophia-Antipolis (FR); Pelissier, Dominique, 06901 Sophia-Antipolis (FR); El Ferachi, Anas, 06901 Sophia-Antipolis (FR)
(74) Representative: Cougard, Jean-Marie

(57) **Abstract**

Displaying a dashboard based on constraints of a user device (102) includes receiving information, selected from a predefined list of features, to be displayed on a user device (102), obtaining a space measurement for the information to be displayed on a user device (102), applying transformation rules to the information to be displayed on the user device (102) based on constraints of the user device, and displaying the information as a dashboard based on the constraints of the user device (102).

## Description

### BACKGROUND

Web portals gather information from a number of sources to design dashboards for a website. The web portals provide flexible and highly customizable ways to design the dashboards based on portal components. Further, the information displayed in the dashboards is tailored to support the end business user's specific activities.

### SUMMARY OF THE INVENTION

The present invention relates to a method for displaying a dashboard based on constraints of a user device, the method comprising:
receiving information, selected from a predefined list of features, to be displayed on a user device;
obtaining a space measurement for the information to be displayed on a user device;
applying transformation rules to the information to be displayed on the user device based on constraints of the user device; and
displaying the information as a dashboard based on the constraints of the user device.

In a particular embodiment, the predefined list of features comprises service level agreement (SLA) statuses, SLA clauses, services, reports, emails, forums, web pages, or combinations thereof.

In a particular embodiment, the method further comprises determining the constraints of the user device.

In a particular embodiment, determining the constraints of the user device comprises determining a display size constraint, an orientation constraint, a remaining space constraint, a number of results to display constraint, or combinations thereof.

In a particular embodiment, determining the constraints for the user device comprises further comprises identifying the user device to determine a maximum space measurement for the user device.

In a particular embodiment, displaying the information as the dashboard based on the constraints of the user device comprises displaying the information as a complete view, a detailed view, a standard view, a limited view, no view, or combinations thereof.

In a particular embodiment, the method further comprises sharing the dashboard between a number of users.

The invention also relates to a system for displaying a dashboard based on constraints of a user device, the system comprising:
a receiving engine to receive information, selected from a predefined list of features, to be displayed on a user device;
an obtaining to obtain a space measurement for the information to be displayed on a user device;
a determining engine to determine constraints of the user device;
an applying engine to apply transformation rules to the information to be displayed on the user device based on the constraints of the user device;
a displaying engine to display the information as a dashboard based on the constraints of the user device; and
a sharing engine to share the dashboard between a number of users.

In a particular embodiment, the predefined list of features comprises service level agreement (SLA) statuses, SLA clauses, services, reports, emails, forums, web pages, or combinations thereof.

In a particular embodiment, the determining engine determines a display size constraint, an orientation constraint, a remaining space constraint, a number of results to display constraint, or combinations thereof.

In a particular embodiment, the determining engine further identifies the user device to determine a maximum space measurement for the user device.

In a particular embodiment, the displaying engine displays the information as a complete view, a detailed view, a standard view, a limited view, no view, or combinations thereof.

The invention also relates to a computer program product for displaying a dashboard based on constraints of a user device, comprising:
a non-transitory computer readable storage medium, said non-transitory computer readable storage medium comprising computer readable program code embodied therewith, said computer readable program code comprising program instructions that, when executed, causes a processor to:
   receive information, selected from a predefined list of features, to be displayed on a user device;
   apply transformation rules to the information to be displayed on the user device based on constraints of the user device; and
   display the information as a dashboard based on the constraints of the user device.

In a particular embodiment, the computer program product further comprises computer readable program code comprising program instructions that, when executed, cause said processor to determine constraints of the user device.

In a particular embodiment, the computer program product further comprises computer readable program code comprising program instructions that, when executed, cause said processor to obtain a space measurement for the information to be displayed on a user device.

### BRIEF DESCRIPTION OF THE DRAWINGS

The accompanying drawings illustrate various examples of the principles described herein and are a part of the specification. The examples do not limit the scope of the claims.
Fig. 1 is a diagram of an example of a system for displaying a dashboard based on constraints of a user device, according to one example of principles described herein.
Fig. 2 is a diagram of an example of a displaying system, according to one example of principles described herein.
Fig. 3 is a diagram of an example of a dashboard displayed on tablet, according to one example of principles described herein.
Fig. 4 is a diagram of an example of a dashboard displayed on smart phone, according to one example of principles described herein.
Fig. 5 is a diagram of an example of a rules library, according to one example of principles described herein.
Fig. 6 is a flowchart of an example of a method for displaying a dashboard based on constraints of a user device, according to one example of principles described herein.
Fig. 7 is a flowchart of an example of a method for displaying a dashboard based on constraints of a user device, according to one example of principles described herein.
Fig. 8 is a diagram of an example of a displaying system, according to one example of principles described herein.
Fig. 9 is a diagram of an example of a displaying system, according to one example of principles described herein.

Throughout the drawings, identical reference numbers designate similar, but not necessarily identical, elements.

### DETAILED DESCRIPTION

As mentioned above, the information displayed in the dashboards is tailored to support the end business user's specific activities. To design a dashboard, the end business user may user a number of techniques to design a dashboard that is tailored to support the end business user's specific activities. One technique may be site redirection. Site redirection is used to force a duplication of a site, templates, and web pages to dedicated user device to design a dashboard. Another technique is responsive themes. Responsive themes apply global presentation rules to organize headers and contents to accommodate a variety of browsers, user devices, and screen resolutions when designing a dashboard. Yet another technique is responsive portlets. Responsive portlets allow a developer, designing the dashboard, to add multiple conditional features and styles to the dashboard to find the best graphical rendering of the dashboard.

To design the dashboards, using the techniques mentioned above, involves manual and time consuming work for the end business user. Further, the techniques mentioned above increase the complexity to design a dashboard and increase the cost to design and maintain the dashboard. Further, the techniques mentioned above involve experience in advanced web technologies. As a result, using the techniques mentioned above can be a complex task for the end business user.

The principles described herein include a method for displaying a dashboard based on constraints of a user device. Such a method includes receiving information, selected from a predefined list of features, to be displayed on a user device, obtaining a space measurement for the information to be displayed on a user device, applying transformation rules to the information to be displayed on the user device based on constraints of the user device, and displaying the information as a dashboard based on the constraints of the user device. Such a method allows the displaying of the information in the dashboard to be optimized based on the constraints of the user device. As a result, the dashboard enhances a user's experience when interacting with the dashboard.

Further, the method can include sharing the dashboard between a number of users. Sharing the dashboard between a number of users will be described in more detail below.

In the present specification and in the appended claims, the term "dashboard" is meant to be understood broadly as a user interface that displays information on a user device via a display. In one example, the dashboard may be a stand-alone application, a web browser based application, a desktop application such as a widget, other dashboards, or combinations thereof. Further, the dashboard may display the information as a complete view, a detailed view, a standard view, a limited view, no view, or combinations thereof.

In the present specification and in the appended claims, the term "constraints" is meant to be understood broadly as limitations of a user device that allow the user device to display a specific amount of information. In one example, the constraints may include a display size constraint, an orientation constraint, a remaining space constraint, a number of results to display constraint, other constraints, or combinations thereof.

In the present specification and in the appended claims, the term "information" is meant to be understood broadly as data that is displayed in a dashboard. In one example, the information may include service level agreement (SLA) statuses, SLA clauses, services, reports, electronic mail (emails), forums, web pages, other information, or combinations thereof.

In the present specification and in the appended claims, the term "space measurement" is meant to be understood broadly as a measurement of space, in terms of memory or pixels, that is to be utilized to display the information. In one example, the space measurement may be measured in bits, bytes, megabits (Mb), megabytes (MB), gigabits (Gb), gigabytes (GB), other space measurements in terms of memory, or combinations thereof. In another example, the space measurement may be in terms of pixels such as 640 x 480, 1024 x 768, 1920x 1080, 2048 x1 536, other space measurements in terms of pixels, or combinations thereof.

In the present specification and in the appended claims, the term "maximum space measurement" is meant to be understood broadly as a maximum measurement of space, in terms of memory or pixels, that a user device may utilize in order to display information in the dashboard. In one example, the maximum space measurement may be measured in bits, bytes, Mb, MB, Gb, GB, other maximum space measurements in terms of memory, or combinations thereof. In another example, the maximum space measurement may be in terms of pixels such as 640 x 480, 1024 x 768, 1920x 1080, 2048 x 1536, other maximum space measurements in terms of pixels, or combinations thereof.

Further, as used in the present specification and in the appended claims, the term "a number of" or similar language is meant to be understood broadly as any positive number comprising 1 to infinity; zero not being a number, but the absence of a number.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described in connection with that example is included as described, but may not be included in other examples.

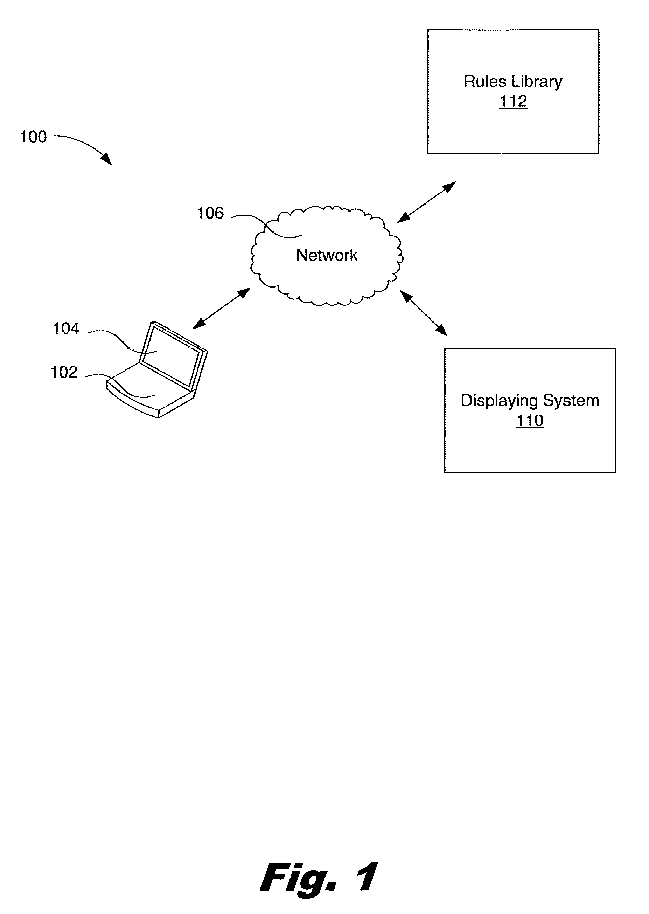

Referring now to the figures, Fig. 1 is a diagram of an example of a system for displaying a dashboard based on constraints of a user device, according to one example of principles described herein. As will be described below, a displaying system is in communication with a user device to obtain a space measurement for information to be displayed on the user device. Further, the displaying system display the information as a dashboard based on the constraints of the user device.

In one example, the system (100) includes a user device (102) with a display (104). In this example, the user device (102) may be a laptop. A user may use the user device (102) accesses a displaying system (110). As will be described below, the displaying system (110) allows a user to create a dashboard that displays information based on constraints of the user device (102) via the display (104).

As illustrated in Fig. 1, the system includes a displaying system (110). In one example, the displaying system (110) receives information, selected from a predefined list of features, to be displayed on a user device (102). In this example, the user may select the information to be displayed on a user device (102). As a result, the information that the user selects is received by the displaying system (110). Further, the information may include SLA status, SLA clauses, SLA analysis, services, modules, other information, or combinations thereof.

The displaying system (110) further obtains a space measurement for the information to be displayed on the user device (102). For example, the space measurement, in terms of memory, may include how many results for SLA statuses are to be displayed. For example, ten results.

Further, the displaying system (110) applies transformation rules to the information to be displayed on the user device (102) based on constraints of the user device (102). In one example, the displaying system (110) may reference a rules library (112). The rules library (112) may include a number of transformation rules describing how to combine information such as graphical components and graphical options.

The displaying system (110) further displays the information in a dashboard based on the constraints of the user device (102). As will be described in other parts of this specification, the constraints for the user device may include a display size constraint, an orientation constraint, a remaining space constraint, a number of results to display constraint, or combinations thereof. Such a system (100) allows the displaying of the information in the dashboard to be optimized based on the constraints of the user device (102). As a result, the dashboard enhances a user's experience when interacting with the dashboard.

While this example has been described with reference to the displaying system being located over the network, the displaying system may be located in any appropriate location according to the principles described herein. For example, the displaying system may be located in a user device, a server, a rules library, other locations, or combinations thereof.

While this example has been described with reference to the user device being a laptop, the user device may be any appropriate user device for displaying a dashboard. For example, the user device may be a desktop, a tablet, a smart phone, a watch, or other user devices.

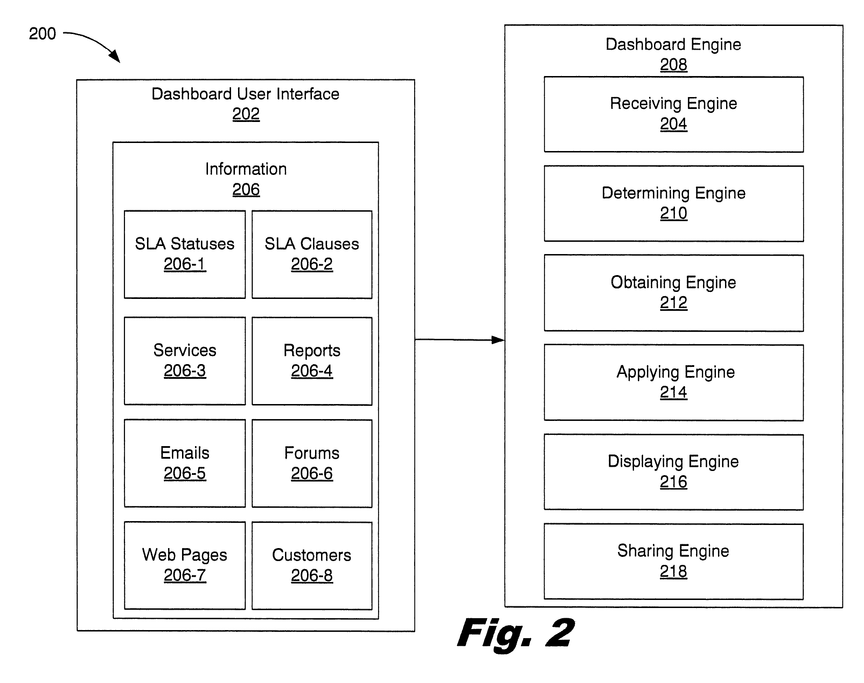

Fig. 2 is a diagram of an example of a displaying system, according to one example of principles described herein. As mentioned above, a displaying system is in communication with a user device to obtain a space measurement for information to be displayed on the user device. Further, the displaying system display the information as a dashboard based on the constraints of the user device.

As illustrated in Fig. 2, the displaying system (200) includes a dashboard user interface (UI) (202). In one example, the dashboard UI (202) is displayed to a user via a display on a user device. As illustrated, the dashboard UI (202) allows a user to select, from a predefined list of features, information (206) to be displayed on the user device. In one example, the information (206) may include SLA statuses (206-1), SLA clauses (206-2), services (206-3), reports (206-4), email (206-5), forums (206-6), web pages (206-7), customers (206-8), or combinations thereof.

In one example, the user is allowed to select at least one element of information (206) listed above. For example, the dashboard user interface (202) may allow the user to select SLA statuses (206-1) and reports (206-4). In one example, the order in which the user selects the information (206) determines the priority to display the information (206) should the displaying system (200) remove any information from the dashboard based on the constraints of the user device.

As illustrated in Fig. 2, the displaying system (200) includes a dashboard engine (208). In one example, the dashboard engine (208) includes a receiving engine (204). The receiving engine (204) receives the information, selected from a predefined list of features, to be displayed on a user device. For example, if the user selects SLA statuses (206-1) and reports (206-4), the receiving engine (204) receives the SLA statuses (206-1) and the reports (206-4).

In this example, the dashboard engine (208) further includes a determining engine (210). The determining engine (210) identifies the user device to determine a maximum space measurement for the user device. For example, the determining engine (210) may identify the user device as a desktop, a tablet, a smart phone, a watch, or as another user device. Further, the determining engine (210) determines constraints for the user device. In one example, the constraints for the user device includes a display size constraint, an orientation constraint, a remaining space constraint, a number of results to display constraint, or combinations thereof. More information about determining the constraints for the user device will be described in later parts of this specification.

The dashboard engine (208) further includes an obtaining engine (212). The obtaining engine (212) obtains a space measurement for the information to be displayed on the user device (102). For example, the space measurement may include how many results for SLA statuses are to be displayed, if the user selects the SLA statuses (206-1). For example, ten results. In one example, the obtaining engine (212) may query a server to obtain the number of results that are to be displayed. In another example, the measurement of space may be in terms of memory. For example, the space measurement may be measured in bits, bytes, Mb, MB, Gb, GB, or combinations thereof. In yet another example, the space measurement may be in terms of pixels such as 640 x 480, 1024 x 768, 1920x 1080, 2048 x 1536, other space measurements in terms of pixels, or combinations thereof.

As illustrated in Fig. 2, the dashboard engine (208) further includes an applying engine (214). The applying engine (214) applies transformation rules to the information to be displayed on the user device (102) based on constraints of the user device (102). In one example, the applying engine (214) may reference the rules library (112) of Fig. 1. The rules library (112) may include a number of transformation rules describing how to combine information such as graphical components and graphical options. Further, the applying engine (214) retrieves and applies transformation rules associated with the information the user selects via the dashboard UI (202). As will be described in other parts of this specification, the transformation rules describe appropriate and ordered levels of detail to display the information. In one example, the levels of detail to display may include to display the information as a complete view, a detailed view, a standard view, a limited view, no view, or combinations thereof.

As illustrated in Fig. 2, the dashboard engine (208) further includes a displaying engine (216). The displaying engine (216) displays the information in a dashboard based on the constraints of the user device. As will be described in other parts of this specification, the constraints for the user device may include a display size constraint, an orientation constraint, a remaining space constraint, a number of results to display constraint, or combinations thereof. Such a system (200) allows the displaying of the information in the dashboard to be optimized based on the constraints of the user device. As a result, the dashboard enhances a user's experience when interacting with the dashboard.

The dashboard engine (208) further includes a sharing engine (218). The sharing engine (218) shares the dashboard between a number of users. In one example, the number of users may include a group of users, an organization, other users, or combinations thereof. As a result, other users are able to view and use the dashboard. In one example, the sharing engine (218) shares the same information in the dashboard for all users. In another example, the sharing engine (218) may customize the dashboard that is shared based on the user, the user device, or combinations thereof.

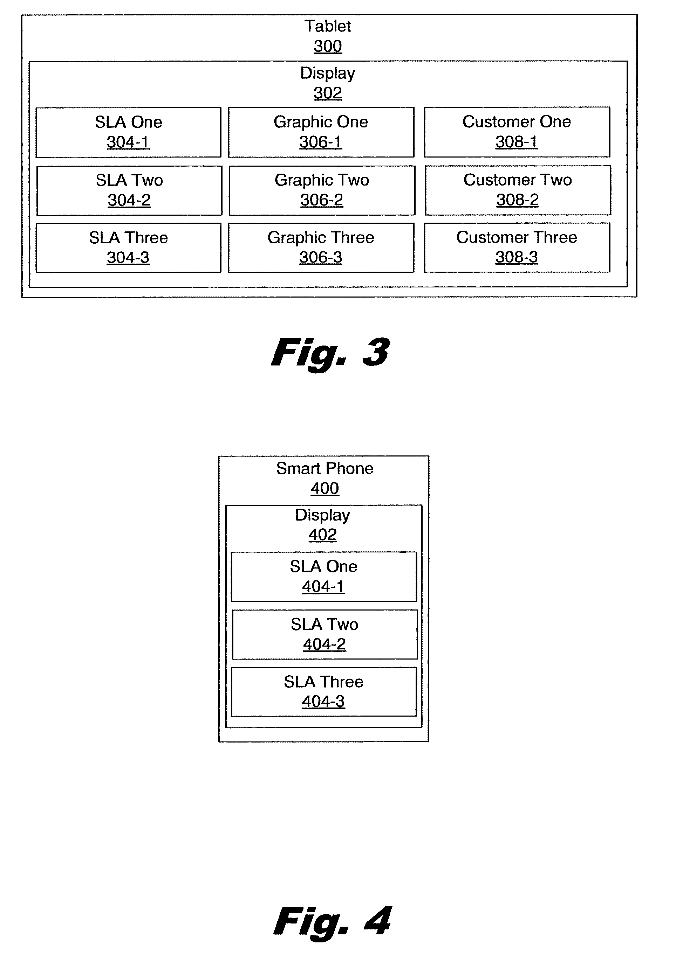

Fig. 3 is a diagram of an example of a dashboard displayed on tablet, according to one example of principles described herein. As mentioned above, the displaying system (200) of Fig. 2 receives information, selected from a predefined list of features, to be displayed on a user device, obtains a space measurement for the information to be displayed on a user device, applies transformation rules to the information to be displayed on the user device based on constraints of the user device, and displays the information as a dashboard based on the constraints of the user device.

In one example, the user selects information such as SLA, Graphic, and Customer. As a result, the displaying system (200) of Fig. 2 receives this information. In this example, the display system (200) of Fig. 2, identifies the user device to determine a maximum space measurement for the user device. Further, the display system (200) of Fig. 2 identifies the user device as a tablet (300). In this example, the maximum space measurement for the tablet (300) may be nine results. The displaying engine (216) of Fig. 2 displays the information in a dashboard based on the constraints of the tablet (300).

Turning specifically to Fig. 3, the tablet (300) displays, via the display (302), information, as a dashboard, such as SLA one (304-1). The SLA one (304-1) may be displayed as a detailed view. Further, the tablet (300) displays, via the display (302), other information such as SLA two (304-2) and SLA three (304-3). The SLA two (304-2) and SLA three (304-3) may be displayed as detailed views.

Similarly, the tablet (300) displays, via the display (302), information such as graphic one (306-1), graphic two (306-2), and graphic three (306-3). In this example, graphic one (306-1), graphic two (306-2), and graphic three (306-3) may be displayed as limited views.

Further, the tablet (300) displays, via the display (302), information such as customer one (308-1), customer two (308-2), and customer three (308-3). In this example, customer one (308-1), customer two (308-2), and customer three (308-3) may be displayed as standard views.

While this example has been described with reference to the maximum space measurement in terms of results, the maximum space measurement may be in other terms. For example, memory, pixels, or combinations thereof.

Fig. 4 is a diagram of an example of a dashboard displayed on smart phone (400), according to one example of principles described herein. As mentioned above, the displaying system (200) of Fig. 2 receives information, selected from a predefined list of features, to be displayed on a user device, obtains a space measurement for the information to be displayed on a user device, applies transformation rules to the information to be displayed on the user device based on constraints of the user device, and displays the information as a dashboard based on the constraints of the user device.

In one example, the user selects information such as SLA. As a result, the displaying system (200) of Fig. 2 receives this information. In this example, the display system (200) of Fig. 2, identifies the user device to determine a maximum space measurement for the user device. In one example, the maximum space measurement may be pre-stored in the user device. In another example, the maximum space measurement is obtained from the user device by querying the user device to determine the maximum space measurement of the user device. Further, the display system (200) of Fig. 2 identifies the user device as a smart phone (400). In this example, the maximum space measurement for the smart phone (400) may be three results. The displaying engine (216) of Fig. 2 displays the information in a dashboard based on the constraints of the smart phone (400).

Turning specifically to Fig. 4, the smart phone (400) displays, via the display (402), SLA one (404-1). The SLA one (404-1) may be displayed as a limited view. Further, the smart phone (400) displays, via the display (402), SLA two (404-2) and SLA three (404-3). The SLA two (404-2) and SLA three (404-3) may be displayed as limited views.

While this example has been described with reference to the maximum space measurement in terms of results, the maximum space measurement may be in other terms. For example, memory, pixels, or combinations thereof.

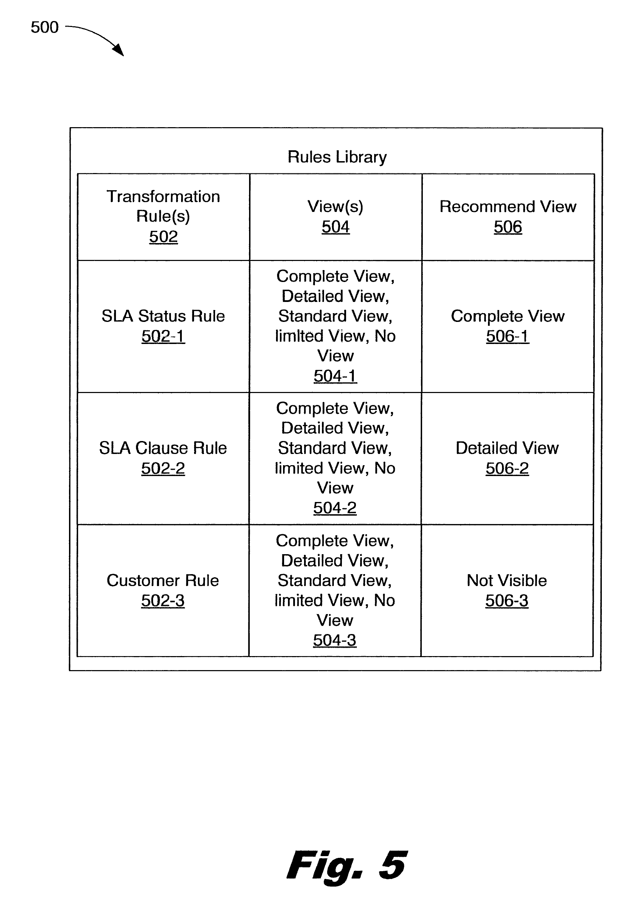

Fig. 5 is a diagram of an example of a rules library, according to one example of principles described herein. As mentioned above, the displaying system (110) of Fig. 1 applies transformation rules to the information to be displayed on a user device based on constraints for the user device. In one example, the displaying system (110) may reference a rules library (500). The rules library (500) may include a number of transformation rules describing how to combine information such as graphical components and graphical options. Further, the transformation rules describe acceptable and ordered levels of detail to display the information. In one example, the levels of detail to display may include to display the information as a complete view, a detailed view, a standard view, a limited view, no view, or combinations thereof.

As illustrated in Fig. 5, the rules library (500) includes a number of transformation rules (502). In one example, the dashboard engine (200) of Fig. 2 retrieves all transformation rules associated with the information to be displayed and sends the transformation rules to the transformation rules engine for evaluation. In this example, the transformation rules include a SLA status rule (502-1), a SLA clause rule (502-2), and a customer rule (502-3).

Further, the rules library (500) may include a number of views (504). In this example, the views (504) may be associated with each transformation rule (502). For example, the views (504) such as a complete view, detailed view, standard view, limited view, and no view (504-1) may be associated with SLA status rule (502-1). In one example, the transformation rules engine evaluates each view (504) in order to determine the best view for the information to be displayed in the dashboard. For example, the displaying system (200) of Fig. 2 checks that the available space for displaying information on the user device and the number of results to display. The displaying system (200) of Fig. 2 queries a server to obtain a maximum space measurement. If the criteria for displaying the information is not met, the transformation rules moves to a less detailed view of the information until the recommended view (506) is a not visible view.

For example, SLA status rule (502-1) may determine that the SLA status can be displayed as a complete view. As a result, the recommended view (506) is a complete view (506-1). Further, the SLA clause rule (502-2) may determine the information may not be displayed as a complete view. As a result, the SLA clause rule (502-2) may determine if the SLA clause can be displayed at a detailed view. In this example, the SLA clause rule (502-2) may determine that the SLA clause can be displayed at a detailed view. As a result, the recommended view (506) for the SLA clause is a detailed view (506-2).

Similarly, the customer rule (502-1) may determine that the customer cannot be displayed as a complete view, a detailed view, a standard view, or a limited view. As a result, the customer rule (502-1) determines that the recommended view (506) is not visible (506-3).

Further, the applying engine (214) of Fig. 2 retrieves and applies transformation rules (502) associated with the information the user selects via the dashboard UI (202) of Fig. 2. As a result, the dashboard may include displaying the SLA statues as a complete view and the SLA clause as a detailed view. Further, the dashboard may include not displaying the customer since the recommended view is not visible.

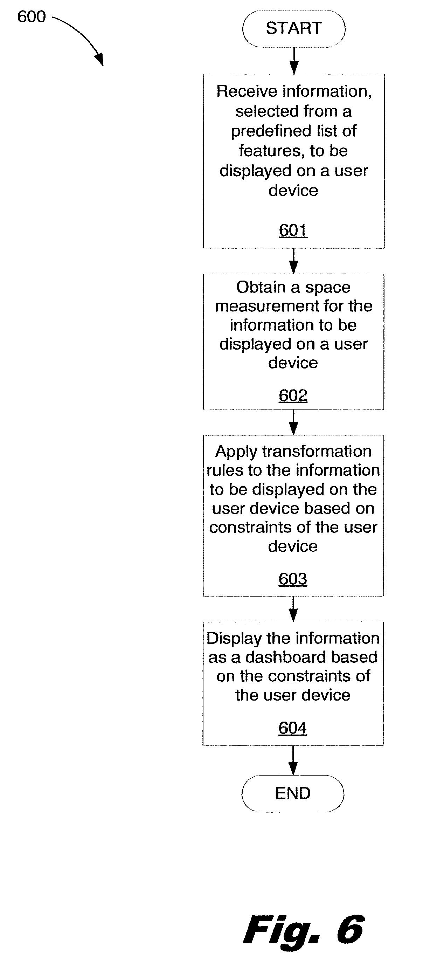

Fig. 6 is a flowchart of an example of a method for displaying a dashboard based on constraints of a user device, according to one example of principles described herein. In one example, the method (600) may be executed by the system (200) of Fig. 2. In other examples, the method (600) may be executed by other systems such as system 100, system 800, or system 900. In one example, the method (600) includes receiving (601) information, selected from a predefined list of features, to be displayed on a user device, obtaining (602) a space measurement for the information to be displayed on a user device, applying (603) transformation rules to the information to be displayed on the user device based on constraints of the user device, and displaying (604) the information as a dashboard based on the constraints of the user device.

As mentioned above, the method (600) includes receiving information, selected from a predefined list of features, to be displayed on a user device. In one example, the predefined list of features includes information such as SLA statuses, SLA clauses, services, reports, emails, forums, web pages, customer, other information, or combinations thereof. As mentioned above, the user may select the information to be displayed on a user device via the dashboard UI (202) of Fig. 2.

In one example, by selecting the information to be displayed on a user device, the information may be received by the receiving engine (204) of Fig. 2. For example, if the user selects SLA statuses, SLA clauses, and customer, the receiving engine (204) of Fig. 2 receives SLA statuses, SLA clauses, and customer.

As mentioned above, the method (600) includes obtaining (602) a space measurement for the information to be displayed on a user device. In one example, if the user selects SLA statuses, SLA clauses, and customer, the space measurement may include the number of result to display for the SLA statuses, the SLA clauses, and the customer. For example, the space measurement for the SLA statuses may include three results. The space measurement for the SLA clauses may include one result. The space measurement for the customer may include one result. As a result, the space measurement for the information is a total of five results.

While this example has been described with reference to the space measurement in terms of results, the space measurement may be in other terms. For example, memory, pixels, or combinations thereof.

As mentioned above, the method (600) includes applying (603) transformation rules to the information to be displayed on the user device based on constraints of the user device. In one example, the transformation rules may be created in a common syntax, such as extensible markup language (XML), that is easily imported and exported. As mentioned above, the applying engine (214) of Fig. 2 retrieves and applies transformation rules associated with the information the user selects via the dashboard UI of Fig. 2. Further, the transformation rules optimize the displaying of the information in the dashboard based on the device constraints and the space measurement.

For example, the displaying system checks that the available space for displaying information on the user device and the number of results to display. The displaying system queries a server to obtain the space of data to display. If the criteria for displaying the information is not met, the transformation rules moves to a less detailed view of the information until the recommended view is a not visible view.

In keeping with the given example, an SLA status rule may determine that the SLA status can be displayed as a complete view. As a result, the recommended view is a complete view. Further, the SLA clause rule may determine the information may not be displayed as a complete view. As a result, the SLA clause rule may determine if the SLA clause can be displayed at a detailed view. In this example, the SLA clause rule may determine that the SLA clause can be displayed at a detailed view. As a result, the recommended view for the SLA clause is a detailed view.

Similarly, the customer rule may determine that the customer cannot be displayed as a complete view, a detailed view, a standard view, or a limited view. As a result, the customer rule determines that the recommended view is not visible.

As mentioned above, the method (600) includes displaying (604) the information in a dashboard based on the constraints of the user device. In one example, displaying the information in the dashboard based on the constraints of the user device comprises displaying the information for the dashboard as a complete view, a detailed view, a standard view, a limited view, no view, or combinations thereof.

In keeping with the given example, the dashboard may include displaying the SLA statues as a complete view and the SLA clause as a detailed view. Further, the dashboard may include not displaying the customer since the recommended view is not visible.

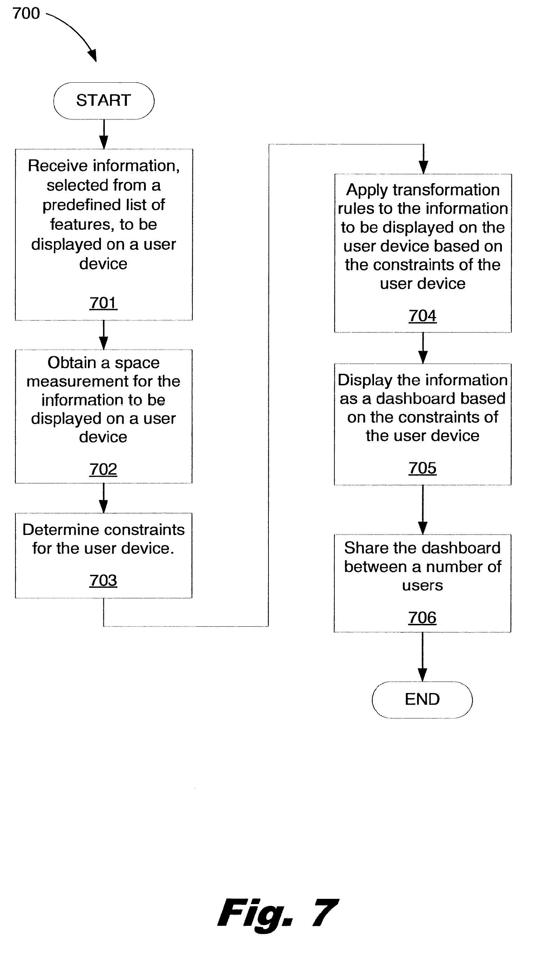

Fig. 7 is a flowchart of an example of a method for displaying a dashboard based on constraints of a user device, according to one example of principles described herein. In one example, the method (700) may be executed by the system (200) of Fig. 2. In other examples, the method (700) may be executed by other systems such as system 100, system 800, or system 900. In one example, the method (700) includes receiving (701) information, selected from a predefined list of features, to be displayed on a user device, obtaining (702) a space measurement for the information to be displayed on a user device, determining (703) constraints for the user device, applying (704) transformation rules to the information to be displayed on the user device based on constraints of the user device, displaying (705) the information as a dashboard based on the constraints of the user device, and sharing (706) the dashboard between a number of users.

As mentioned above, the method (700) includes, determining (703) constraints for the user device. In one example, determining constraints for the user device includes identifying the user device to determine a maximum space measurement for the user device. In one example, the displaying system may identify the user device as a desktop. In another example, the displaying system may identify the user device as a tablet. In yet another example, the displaying system may identify the user device as a smart phone. In still another example, the displaying system may identify the user device as a watch.

In one example, constraints for the user device are determined by querying the user device for the constraints. In another example, constraints for the user device are determined by querying a server that stores information about the constraints for all user devices.

Further, determining constraints for the user device includes determining a display size constraint for the user device. For example, a user device, such as a smart phone, may have a small display size that is able to display less information than a desktop having a large display size. As a result, determining the display size constraint for the user device allows the displaying system to determine how much information the user device can display.

Further, determining constraints for the user device includes determining an orientation constraint for the user device. In one example, the orientation constraint may determine if the display on the user device is to display the information in a portrait view or a landscape view. In one example, a portrait view may be able to display information that is adjusted to be displayed in a vertical fashion. In this example, a landscape view may be able to display information that is adjusted to be displayed in a horizontal fashion.

Further, determining constraints for the user device includes determining a remaining space constraint for the user device. In one example, the remaining space constraint determines how much display space is available to display information on the user device. For example, a display that always displays a widget on the display has less remaining space to information than a display that never displays a widget on the display.

Further, determining constraints for the user device includes determining a number of results to display constraint. For example, the number of results to display constraint may include allowing a display on a watch to display a maximum of two results. Further, the number of results to display constraint may include allowing a display on a desktop to display a maximum of twenty results.

As mentioned above, the method (700) includes sharing (706) the dashboard between a number of users. In one example, the dashboard may be displayed between one user, a group of user, an organization, or combinations thereof. By sharing the dashboard between a number of users, the dashboard may be reused for multiple users.

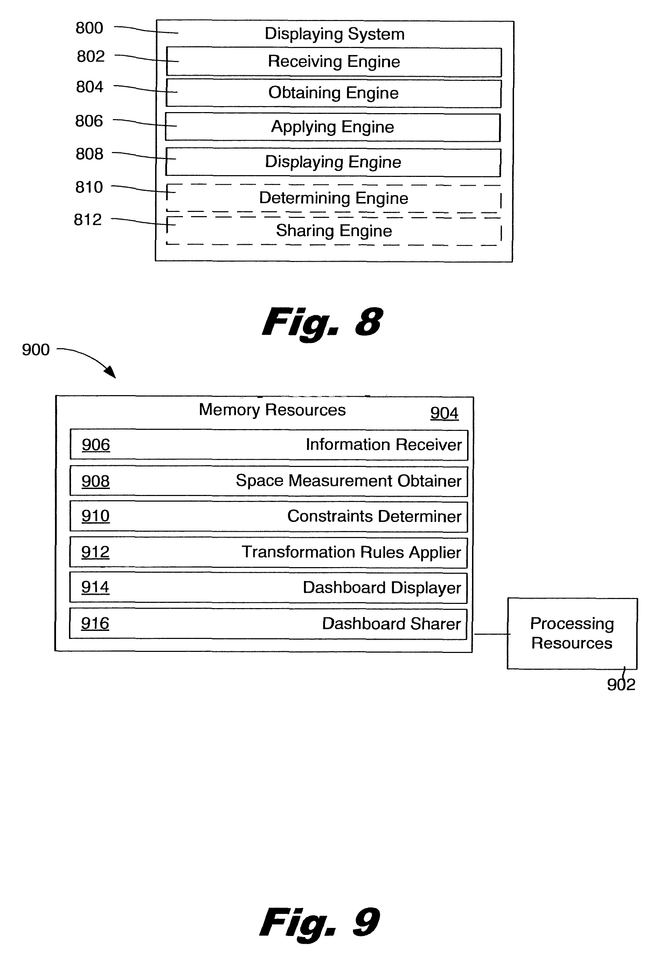

Fig. 8 is a diagram of an example of a displaying system, according to one example of principles described herein. The displaying system (800) includes a receiving engine (802), an obtaining engine (604), an applying engine (806), and a displaying engine (808). In this example, the displaying system (800) also includes a determining engine (810) and a sharing engine (812). The engines (802, 804, 806, 808, 810, 812) refer to a combination of hardware and program instructions to perform a designated function. Each of the engines (802, 804, 806, 808, 810, 812) may include a processor and memory. The program instructions are stored in the memory and cause the processor to execute the designated function of the engine.

The receiving engine (802) receives information, selected from a predefined list of features, to be displayed on a user device. In one example, the predefined list of features includes information such as SLA statuses, SLA clauses, services, reports, emails, forums, web pages, other information, or combinations thereof.

The obtaining engine (604) obtains a space measurement for the information to be displayed on a user device. In one example, the space measurement may be in terms of results, memory, pixels, or combinations thereof.

The applying engine (806) applies transformation rules to the information to be displayed on the user device based on constraints of the user device. In one example, the applying engine (806) evaluates each view for the information in order to determine the best view for the information to be displayed in the dashboard.

The displaying engine (808) displays the information as a dashboard based on the constraints of the user device. In one example, the displaying engine (808) displays the information as a complete view, a detailed view, a standard view, a limited view, no view, or combinations thereof.

The determining engine (810) determining the constraints of the user device. In one example, the determining engine (810) identifies the user device to determine a maximum space measurement for the user device. Further, the determining engine (810) determines a display size constraint, an orientation constraint, a remaining space constraint, a number of results to display constraint, or combinations thereof of the user device.

The sharing engine (812) shares the dashboard between a number of users. In one example, the number of users may include a group of users, an organization, other users, or combinations thereof. As a result, other users are able to view and use the dashboard.

Fig. 9 is a diagram of an example of a displaying system, according to one example of principles described herein. In this example, displaying system (900) includes processing resources (902) that are in communication with memory resources (904). Processing resources (902) include at least one processor and other resources used to process programmed instructions. The memory resources (904) represent generally any memory capable of storing data such as programmed instructions or data structures used by the displaying system (900). The programmed instructions shown stored in the memory resources (904) include an information receiver (906), a space measurement obtainer (908), a constraints determiner (910), a transformation rules applier (912), a dashboard displayer (914), and a dashboard sharer (916).

The memory resources (904) include a computer readable storage medium that contains computer readable program code to cause tasks to be executed by the processing resources (902). The computer readable storage medium may be a non-transitory, physical storage medium. The computer readable storage medium may be any appropriate storage medium that is not a transmission storage medium. A non-exhaustive list of computer readable storage medium types includes non-volatile memory, volatile memory, random access memory, write only memory, flash memory, electrically erasable program read only memory, other types of memory, or combinations thereof.

The information receiver (906) represents programmed instructions that, when executed, cause the processing resources (902) to receive information, selected from a predefined list of features, to be displayed on a user device. The space measurement obtainer (908) represents programmed instructions that, when executed, cause the processing resources (902) to obtain a space measurement for the information to be displayed on a user device. The constraints determiner (910) represents programmed instructions that, when executed, cause the processing resources (902) to determine the constraints of the user device.

The transformation rules applier (912) represents programmed instructions that, when executed, cause the processing resources (902) to apply transformation rules to the information to be displayed on the user device based on constraints of the user device. The dashboard displayer (914) represents programmed instructions that, when executed, cause the processing resources (902) to display the information as a dashboard based on the constraints of the user device. The dashboard sharer (916) represents programmed instructions that, when executed, cause the processing resources (902) to share the dashboard between a number of users.

Further, the memory resources (904) may be part of an installation package. In response to installing the installation package, the programmed instructions of the memory resources (904) may be downloaded from the installation package's source, such as a portable medium, a server, a remote network location, another location, or combinations thereof. Portable memory media that are compatible with the principles described herein include DVDs, CDs, flash memory, portable disks, magnetic disks, optical disks, other forms of portable memory, or combinations thereof. In other examples, the program instructions are already installed. Here, the memory resources can include integrated memory such as a hard drive, a solid state hard drive, or the like.

In some examples, the processing resources (902) and the memory resources (904) are located within the same physical component, such as a server, or a network component. The memory resources (904) may be part of the physical component's main memory, caches, registers, non-volatile memory, or elsewhere in the physical component's memory hierarchy. Alternatively, the memory resources (904) may be in communication with the processing resources (902) over a network. Further, the data structures, such as the libraries, may be accessed from a remote location over a network connection while the programmed instructions are located locally. Thus, the displaying system (900) may be implemented on a user device, on a server, on a collection of servers, or combinations thereof.

The displaying system (900) of Fig. 9 may be part of a general purpose computer. However, in alternative examples, the displaying system (900) is part of an application specific integrated circuit.

The preceding description has been presented to illustrate and describe examples of the principles described. This description is not intended to be exhaustive or to limit these principles to any precise form disclosed. Many modifications and variations are possible in light of the above teaching.

## Claims

1. A method for displaying a dashboard based on constraints of a user device, the method comprising:
receiving information, selected from a predefined list of features, to be displayed on a user device;
obtaining a space measurement for the information to be displayed on a user device;
applying transformation rules to the information to be displayed on the user device based on constraints of the user device; and
displaying the information as a dashboard based on the constraints of the user device.

2. The method of claim 1, in which the predefined list of features comprises service level agreement (SLA) statuses, SLA clauses, services, reports, emails, forums, web pages, or combinations thereof.

3. The method of claim 1 or 2, further comprising determining the constraints of the user device.

4. The method of claim 3, in which determining the constraints of the user device comprises determining a display size constraint, an orientation constraint, a remaining space constraint, a number of results to display constraint, or combinations thereof.

5. The method of claim 3 or 4, in which determining the constraints for the user device comprises further comprises identifying the user device to determine a maximum space measurement for the user device.

6. The method of any one of claims 1 to 5, in which displaying the information as the dashboard based on the constraints of the user device comprises displaying the information as a complete view, a detailed view, a standard view, a limited view, no view, or combinations thereof.

7. The method of any one of claims 1 to 6, further comprising sharing the dashboard between a number of users.

8. A system for displaying a dashboard based on constraints of a user device, the system comprising:
a receiving engine to receive information, selected from a predefined list of features, to be displayed on a user device;
an obtaining to obtain a space measurement for the information to be displayed on a user device;
a determining engine to determine constraints of the user device;
an applying engine to apply transformation rules to the information to be displayed on the user device based on the constraints of the user device;
a displaying engine to display the information as a dashboard based on the constraints of the user device; and
a sharing engine to share the dashboard between a number of users.

9. The system of claim 8, in which the predefined list of features comprises service level agreement (SLA) statuses, SLA clauses, services, reports, emails, forums, web pages, or combinations thereof.

10. The system of claim 8 or 9, in which the determining engine determines a display size constraint, an orientation constraint, a remaining space constraint, a number of results to display constraint, or combinations thereof.

11. The system of any one of claims 8 to 10, in which the determining engine further identifies the user device to determine a maximum space measurement for the user device.

12. The system of any one of claims 8 to 11, in which the displaying engine displays the information as a complete view, a detailed view, a standard view, a limited view, no view, or combinations thereof.

13. A computer program product for displaying a dashboard based on constraints of a user device, comprising:
a non-transitory computer readable storage medium, said non-transitory computer readable storage medium comprising computer readable program code embodied therewith, said computer readable program code comprising program instructions that, when executed, causes a processor to:
receive information, selected from a predefined list of features, to be displayed on a user device;
apply transformation rules to the information to be displayed on the user device based on constraints of the user device; and
display the information as a dashboard based on the constraints of the user device.

14. The product of claim 13, further comprising computer readable program code comprising program instructions that, when executed, cause said processor to determine constraints of the user device.

15. The product of claim 13 or 14, further comprising computer readable program code comprising program instructions that, when executed, cause said processor to obtain a space measurement for the information to be displayed on a user device.
